# EUROPEAN PATENT APPLICATION

(11) **EP 4 801 086 A1**
(43) Date of publication of application: **02.09.2026**
(21) Application number: 26160313.8
(22) Date of filing: 24.02.2026
(51) Int. Cl.: H04W 12/069, H04W 12/08, H04W 48/16, H04W 84/12, H04W 88/08

(54) **MULTIPLE SERVICE SET IDENTIFIER ISOLATION ON A NETWORK**

(30) Priority: 27.02.2025 US 202519066079
(71) Applicant: Avago Technologies International Sales Pte. Limited, Singapore 768923 (SG)
(72) Inventor: Buhari, Nizamudeen Mohamed, 560100 Bangalore, Karnataka (IN); Kumar, Sandeep, 560100 Bangalore, Karnataka (IN); Dutta, Mahesh H K, 560100 Bangalore, Karnataka (IN); Kulkarni, Karthik Desh, 560100 Bangalore, Karnataka (IN); Sahoo, Jimut Ranjan, 560100 Bangalore, Karnataka (IN); Swami, Anand Kumar, 560100 Bangalore, Karnataka (IN)
(74) Representative: Dilg, Haeusler, Schindelmann Patentanwaltsgesellschaft mbH

(57) **Abstract**

An access point (AP) may establish multiple virtual networks in a wireless local area network (WLAN) that are associated with a basic service set identifier (BSSID) of the AP and unique service set identifiers (SSIDs). The AP may transmit, to a station (STA) in the WLAN, a beacon including beacon data indicating the BSSID and at least one of an SSID that is not associated with the multiple virtual networks or an indicator that the AP is associated with one or more virtual networks. The STA may determine, based on the BSSID, to connect to a virtual network of the multiple virtual networks. The STA may transmit, to the AP, a request for discovery of the virtual network indicating a unique SSID of the virtual network. The STA may receive, from the AP and based on the request, a response confirming that the virtual network is available.

## Description

### BACKGROUND

An access point (AP) may support a wireless network to provide wireless connectivity to stations (STAs). The AP may serve as a hub that facilitates communication between STAs and often connects the wireless network to a wired backbone network. The AP operates within a basic service set (BSS), where it coordinates medium access, manages authentication and association of STAs, and handles scheduling and transmission of frames.

### SUMMARY

Some implementations described herein provide an access point in a wireless local area network (WLAN), the access point comprising: circuitry configured to: establish multiple virtual networks in the WLAN that are associated with a basic service set identifier of the access point and unique service set identifiers corresponding to unique security credentials; transmit, to a station in the WLAN, a beacon including beacon data indicating the basic service set identifier and at least one of a service set identifier that is not associated with the multiple virtual networks or an indicator that the access point is associated with one or more virtual networks.

Some implementations described herein provide station in a wireless local area network (WLAN), the station comprising: circuitry configured to: receive, from an access point managing multiple virtual networks in the WLAN that are associated with a basic service set identifier of the access point, a beacon including beacon data indicating the basic service set identifier and at least one of a service set identifier that is not associated with the multiple virtual networks or an indicator that the access point is associated with one or more virtual networks; determine, based on the basic service set identifier, to connect to a virtual network of the multiple virtual networks; transmit, to the access point, a request for discovery of the virtual network indicating a unique service set identifier of the virtual network; and receive, from the access point and based on the request, a response confirming that the virtual network is available.

Some implementations described herein provide a method for multiple service set identifier isolation on a wireless local area network (WLAN), the method comprising: creating, by a device, multiple virtual networks in the WLAN; assigning, by the device, a basic service set identifier of a basic service set supporting the multiple virtual networks to the multiple virtual networks; assigning, by the device, unique service set identifiers to the multiple virtual networks; assigning, by the device, unique security credentials to the unique service set identifiers; and transmitting, by the device, a beacon associated with an access point managing the multiple virtual networks, including beacon data indicating the basic service set identifier and at least one of a service set identifier that is not associated with the multiple virtual networks or an indicator indicating that the access point is associated with one or more virtual networks.

### BRIEF DESCRIPTION OF THE DRAWINGS

Fig. 1A is a diagram of an example network environment.
Figs. 1B-1C are diagrams of example components of a computing device associated with multiple service set identifier (SSID) isolation on a network.
Fig. 2 is a diagram of an example associated with multiple SSID isolation on a network.
Fig. 3 is an example sequence diagram associated with multiple SSID isolation on a network.
Fig. 4 is an example sequence diagram associated with multiple SSID isolation on a network.
Fig. 5 is an example sequence diagram associated with multiple SSID isolation on a network.
Fig. 6 is a flowchart of an example process associated with multiple SSID isolation on a network.
Fig. 7 is a flowchart of an example process associated with multiple SSID isolation on a network.

### DETAILED DESCRIPTION OF EXAMPLE EMBODIMENTS

The following detailed description of example implementations refers to the accompanying drawings. The same reference numbers in different drawings may identify the same or similar elements. The following standards, including any draft versions of such standards, are hereby incorporated by reference in their entirety and are made a part of the present disclosure for all purposes: Wireless Fidelity (Wi-Fi^{®}) Alliance^{®} standards and Institute of Electrical and Electronics Engineers (IEEE^{®}) 802.11 standards, including, but not limited to, 802.11^{™}, 802.11a^{™}, 802.11b^{™}, 802.11g^{™}, 802.11n^{™}, 802.11ac^{™}, 802.11ax^{™}, 802.11be^{™}, 802.11ad^{™}, 802.11ay^{™}, 802.11af^{™}, 802.11ah^{™}, 802.11ai^{™}, 802.11aj^{™}, 802.11ak^{™}, 802.11aq^{™}, 802.11ba^{™}, 802.11c^{™}, 802.11d^{™}, 802.11e^{™}, 802.11f^{™}, 802.11h^{™}, 802.11i^{™}, and 802.11j^{™}. Although the present disclosure may reference aspects of these standard(s), this disclosure is in no way limited by these standard(s).

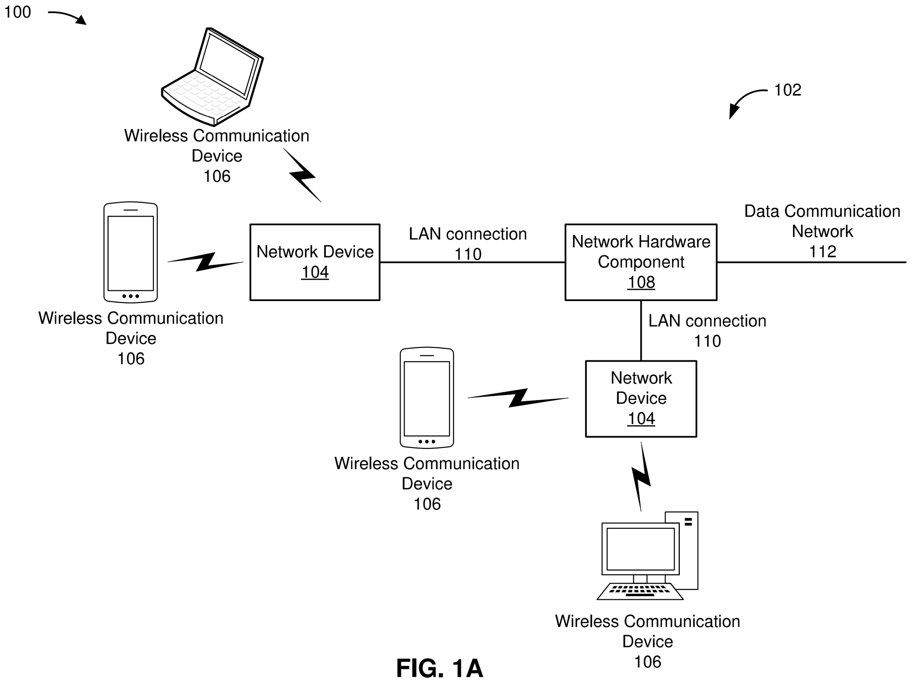

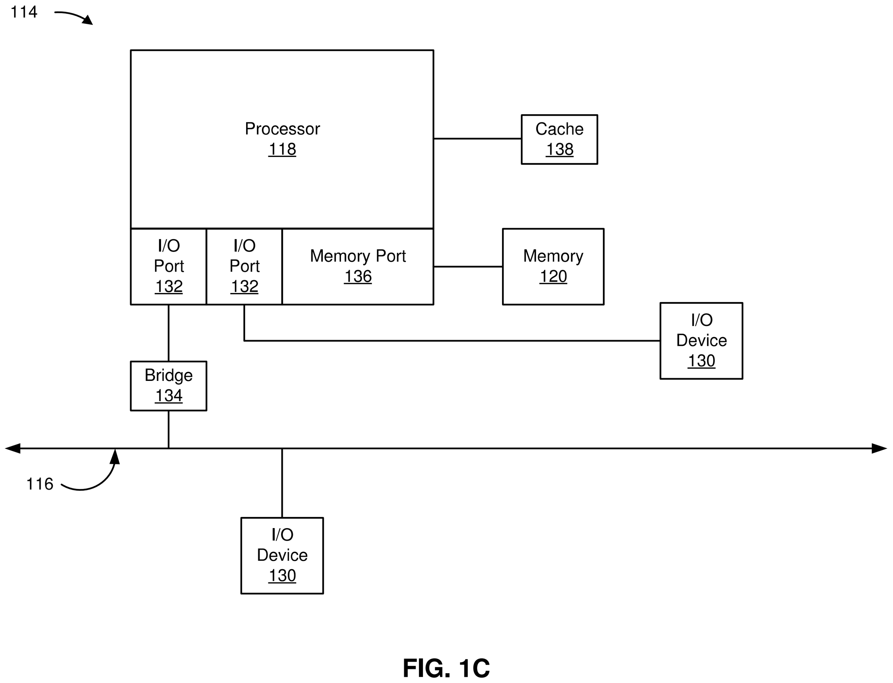

Fig. 1A is a diagram of an example environment (e.g., an example network environment 100) in which systems and/or methods described herein may be implemented. As shown in Fig. 1A, the network environment 100 includes a wireless communication system 102. In some implementations, the wireless communication system 102 may include devices and/or components that facilitate data transmission and/or connectivity via a network (e.g., a wired and/or a wireless network). For example, the wireless communication system 102 may include a network device, which may also be referred to herein as an access point (AP) or a wireless AP, a wireless communication device, which may also be referred to herein as a station (STA), and a network hardware component, which may also be referred to herein as a node.

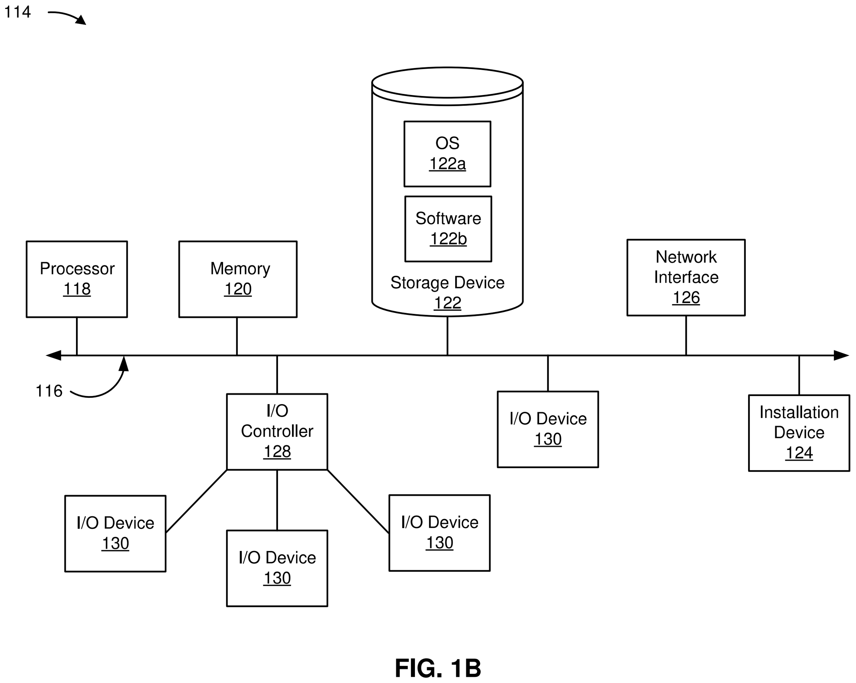

Communication among the network device, the wireless communication device, and/or the network hardware component may be enabled via a network (e.g., a wired and/or a wireless network connection). The network device, the wireless communication device, and the network hardware component are depicted and described in more detail in connection with Figs. 1B-1C and/or as described in more detail elsewhere herein.

In some implementations, the network may include any type and/or form of network. As an example, the network may include a point-to-point network, a broadcast network, a telecommunications network, a data communication network, and/or a computer network, among other examples. The network may include any suitable network topology, such as a bus, a star, and/or a ring network topology, among other examples. Accordingly, for example, the network may be any suitable network topology capable of supporting the systems and methods described herein.

In some implementations, the network may include a wireless wide area network (WAN) (e.g., a cellular network or a public land mobile network), a local area network (LAN) (e.g., a wired LAN or a wireless local area network (WLAN), such as a Wi-Fi^{®} network), a wireless personal area network (WPAN) (e.g., a Bluetooth^{®} network), a nearfield communication network, a Zigbee^{®} network, a long range wide area network (LoRaWAN^{®}), an ultra-wideband (UWB) network, a worldwide interoperability for microwave access (WiMAX^{®}) network, a satellite network, a telephone network, a private network, the Internet, or a combination of these and other network types. Additionally, in some implementations, different types of data may be transmitted using different protocols, and the same type of data may also be transmitted using multiple protocols.

The network device may include an antenna, or antenna array, to communicate with the wireless communication device (e.g., within a coverage area of the network device). In some implementations, the network device may include one or more devices, such as Wi-Fi^{®} APs that facilitate WLANs and/or cellular base stations (e.g., fifth generation (5G) base stations) that provide network connectivity for cellular communication systems. The network device may enable wireless connectivity for the wireless communication device by managing data transmission and ensuring proper communication within a respective network environment.

In some implementations, the network device may enable the wireless communication device to connect to a wired network using standards, such as Wi-Fi^{®} standards and/or 802.11 standards. The network device may be implemented (e.g., configured, designed and/or built) for operating in a WLAN.

In some implementations, the network device may connect to a router (e.g., via a wired network) as a standalone device. In some implementations, the network device may be a component of a router. The network device may provide multiple devices (e.g., multiple wireless communication devices) access to a network. The network device may connect to a wired ethernet connection and provide wireless connections using radio frequency (RF) links for other devices (e.g., other wireless communication devices) to utilize that wired connection. The network device may be implemented to support a standard (e.g., a standard defined by the IEEE). The network device may be configured and/or used to support public Internet hotspots, and/or on a network to extend a Wi-Fi^{®} signal range of the network.

In some implementations, the network device may be used for wireless networks in various environments (e.g., in-home, in-vehicle, and/or in-building environments) utilizing protocols, such as IEEE 802.11, Bluetooth, ZigBee, and/or any other RF-based protocol, including variations thereof. The wireless communication device may include a radio (e.g., a built-in radio) and/or may be operably coupled to an external radio. The network device and the wireless communication device may operate in accordance with various aspects of the disclosure as described herein, which may enhance performance, reduce costs and/or size, and/or improve broadband applications, among other examples. Each wireless communication device may function as a client node seeking access to resources (e.g., data and connections to networked nodes, such as servers) via one or more network devices.

The wireless communication device may include one or more devices, such as smartphones, laptops, tablets, internet-of-things (IoT) devices, and/or other mobile devices, that connect to network devices (e.g., APs or base stations) to access network services. These wireless communication devices may manage data reception and transmission through established wireless connections and interact with the network environment to facilitate communication.

The network hardware component may include one or more devices, such as routers, gateways, switches, and/or other networking components, that provide wired or wireless connectivity and enable communication within an LAN connection and/or between devices (e.g., network devices and/or wireless communication devices) in a network environment. The network hardware components may route data, manage network traffic, and/or ensure communication integrity between devices (e.g., network devices and/or wireless communication device) within a wireless network system.

**In** some implementations, the wireless communication device may register with a network device to receive services from the wireless communication system 102 (e.g., via a single-user multiple-input multiple-output (SU-MIMO) configuration or a multi-user multiple-input multiple-output (MU-MIMO) configuration, among other examples). For direct connections (e.g., point-to-point communications), wireless communication devices may communicate directly via an allocated channel and communications protocol. Additionally, in some implementations, the wireless communication devices may be mobile and/or static (e.g., relatively static) with respect to the network device.

The network devices and/or the wireless communication devices may be deployed as, and/or executed on, any type and/or form of computing device, such as a computer, a network device, and/or an appliance capable of communicating on any type and/or form of network and performing the operations described herein.

As further shown in Fig. 1A, the network environment 100 includes network devices 104 (e.g., APs), wireless communication devices 106 (e.g., STAs), and a network hardware component 108 (e.g., a node). The network hardware component 108 may provide network connections (e.g., shown as LAN connections 110 and a data communication network 112 in Fig. 1A) for the wireless communication system 102. The network devices 104 may be operably coupled to the network hardware component 108 via the LAN connections 110. Although the network hardware component 108 is shown and described in connection with Fig. 1A as providing the LAN connections 110 and the data communication network 112, the network hardware component 108 may provide any suitable network connections.

The number and arrangement of devices and networks shown in Fig. 1A are provided as an example. In practice, there may be additional devices and/or networks, fewer devices and/or networks, different devices and/or networks, or differently arranged devices and/or networks than those shown in Fig. 1A. Furthermore, two or more devices shown in Fig. 1A may be implemented within a single device, or a single device shown in Fig. 1A may be implemented as multiple, distributed devices. Additionally, or alternatively, a set of devices (e.g., one or more devices) of the network environment 100 may perform one or more functions described as being performed by another set of devices of the network environment 100.

Figs. 1B-1C are diagrams of an example computing device 114, as described herein. The computing device 114 may correspond to a network device (e.g., the network devices 104), a wireless communication device (e.g., the wireless communication devices 106), and/or a network hardware component (e.g., the network hardware component 108). In some implementations, a network device (e.g., the network devices 104), a wireless communication device (e.g., the wireless communication devices 106), and/or a network hardware component (e.g., the network hardware component 108) may include the computing device 114.

As shown in Figs. 1B-1C, the computing device 114 includes a bus 116 (e.g., a system bus), a processor 118 (e.g., a CPU), a memory 120 (e.g., a main memory), a storage device 122, an installation device 124, a network interface 126, an input/output (I/O) controller 128, I/O devices 130, an I/O port (e.g., shown as I/O ports 132), a bridge 134, a memory port 136, and a cache 138.

The bus 116 may include one or more components that enable wired and/or wireless communication among the components of the computing device 114. The bus 116 may couple together two or more components of Figs. 1B-1C, such as via operative coupling, communicative coupling, electronic coupling, and/or electric coupling. For example, the bus 116 may include an electrical connection (e.g., a wire, a trace, and/or a lead, among other examples) and/or a wireless bus. Furthermore, when an element is referred to herein as being "connected" or "coupled" to another element, it should be understood that the elements may be directly connected to the other element, or have intervening elements present between the elements. In contrast, when an element is referred to as being "directly connected" or "directly coupled" to another element, it should be understood that no intervening elements are present in the "direct" connection between the elements. However, the existence of a direct connection does not exclude other connections, in which intervening elements may be present.

The processor 118 may include a central processing unit (CPU), a graphics processing unit (GPU), a microprocessor, a controller, a microcontroller, a digital signal processor, a field-programmable gate array (FPGA), an application-specific integrated circuit (ASIC), and/or another type of processing component and/or circuitry. The processor 118 may be implemented in hardware, software, and/or a combination of hardware and software. In some implementations, the processor 118 may include one or more processors capable of being programmed to perform one or more operations or processes as described herein.

The memory 120 may include volatile and/or nonvolatile memory. For example, the memory 120 may include random access memory (RAM), read-only memory (ROM), a hard disk drive, and/or another type of memory (e.g., a flash memory, a magnetic memory, and/or an optical memory). The memory 120 may include internal memory (e.g., RAM, ROM, or a hard disk drive) and/or removable memory (e.g., removable via a universal serial bus (USB) connection). The memory 120 may be a non-transitory computer-readable medium. The memory 120 may store information, one or more instructions, and/or software (e.g., one or more software applications) related to the operation of the computing device 114. In some implementations, the memory 120 may include one or more memories that are coupled (e.g., communicatively coupled) to one or more processors (e.g., the processor 118), such as via a bus (e.g., the bus 116). Communicative coupling between the processor 118 and the memory 120 may enable the processor 118 to read and/or process information stored in the memory 120 and/or to store information in the memory 120.

In some implementations, the memory 120 may include one or more memory chips capable of storing data and/or allowing a storage location to be accessed (e.g., directly accessed) by the processor 118, such as any type or variant of static random-access memory (SRAM), dynamic random-access memory (DRAM), ferroelectric RAM (FRAM), not-and (NAND) flash memory, not-or (NOR) flash memory, and/or solid state drives (SSDs). The memory 120 may be based on any suitable memory chips capable of operating as described herein. As shown in Fig. 1B, the processor 118 may communicate with the memory 120 via the bus 116, as described in more detail elsewhere herein. As further shown in Fig. 1B, the storage device 122 may include an operating system (OS) 122a and software 122b.

In some implementations, the processor 118 may communicate directly with the cache 138 (e.g., via a secondary bus, which is sometimes referred to as a backside bus). In some implementations, the processor 118 may communicate with the cache 138 using the bus 116. In some implementations, the cache 138 may be provided by SRAM, block static random-access memory (BSRAM,) and/or embedded dynamic random-access memory (EDRAM). In some implementations, the processor 118 may communicate with the I/O devices 130 via the bus 116. Various buses may be used to connect the processor 118 to any of the I/O devices 130, such as a video electronics standards association (VESA) local bus (VESA VL), an industry standard architecture (ISA) bus, an extended industry standard architecture (EISA) bus, a microchannel architecture (MCA) bus, a peripheral component interconnect extended (PCI) bus, a peripheral component interconnect extended (PCI-X) bus, a PCI-Express (PCle) bus, and/or a NuBus.

In some implementations, the I/O devices 130 may include a display device such as a video display, and the processor 118 may use an advanced graphics port (AGP) to communicate with the video display. In some implementations, the processor 118 may communicate directly with the I/O devices 130 (e.g., via HYPERTRANSPORT, RAPIDIO, or INFINIBAND communications technology). In some implementations, local buses and/or direct communication may be utilized (e.g., the processor 118 may communicate with the I/O devices 130 using a local interconnect bus and/or directly).

The I/O devices 130 may include one or more input devices that enable the computing device 114 to receive input, such as user input and/or sensed input. For example, the input devices may include one or more touch screens, keyboards, keypads, mice, trackpads, trackballs, dials, touch pads, drawing tablets, buttons, microphones, switches, sensors, global positioning system (GPS) sensors, accelerometers, gyroscopes, and/or actuators, among other examples.

The I/O devices 130 may include one or more output devices that enable the computing device 114 to provide output. For example, the I/O devices 130 may include one or more video displays, speakers, inkjet printers, laser printers, projectors, dye-sublimation printers, and/or light-emitting diodes (LEDs), among other examples.

An I/O controller (e.g., the I/O controller 128) may control the I/O devices 130. For example, the I/O controller 128 may control one or more keyboards and/or pointing device (e.g., mice and/or optical pens), among other examples. Furthermore, an I/O device (e.g., of the I/O devices 130) may provide storage and/or an installation medium for the computing device 114. In some implementations, the computing device 114 may provide universal serial bus (USB) connections to receive handheld USB storage devices.

The installation device 124 may be any suitable installation device, such as a disk drive, a CD-ROM drive, a CD-R/RW drive, a DVD-ROM drive, a flash memory drive, a tape drive (e.g., one or more tape drives of various formats), a USB device, a hard-drive, a network interface, and/or any other device suitable for installing software (e.g., the software 122b) and/or programs. In some implementations, the computing device 114 may include a storage device, such as one or more hard disk drives and/or redundant arrays of independent disks, for storing an operating system (OS) (e.g., the OS 122a) and/or other software, and/or for storing application software programs, such as any program or software for implementing (e.g., configured and/or designed for) the systems and methods described herein. Additionally, or alternatively, the installation device 124 may also be used as the storage device 122. Additionally, or alternatively, the OS 122a and/or the software 122b may be run from any bootable medium.

The network interface 126 may enable the computing device 114 to interface with a network via a connection, such as via telecommunication lines, LANs and/or WAN links (e.g., 802.11, T1, T3, 56kb, X.25, SNA, DECNET), broadband connections (e.g., ISDN, Frame Relay, ATM, Gigabit Ethernet, Ethernet-over-SONET), wireless connections, and/or some combination of any or all of the above. In some implementations, connections may be established using one or more communication protocols, such as TCP/IP, IPX, SPX, NetBIOS, Ethernet, ARCNET, SONET, SDH, Fiber Distributed Data Interface (FDDI), RS232, IEEE 802.11 (including versions 802.11a, 802.11b, 802.11g, 802.11n, 802.11ac, and 802.11ad), CDMA, GSM, WiMax, and/or direct asynchronous connections.

In some implementations, the computing device 114 may communicate with other computing devices via any type and/or form of gateway and/or tunneling protocol, such as a secure socket layer (SSL) protocol and/or a transport layer security (TLS) protocol. The network interface 126 may include a network adapter (e.g., a built-in network adapter), a network interface card, a personal computer memory card international association (PCMCIA) network card, a card bus network adapter, a wireless network adapter, a USB network adapter, a modem, and/or or any other device suitable for interfacing the computing device 114 to any type of network capable of communicating and/or performing the operations as described herein.

In some implementations, the computing device 114 may include, or be connected to, one or more display devices (e.g., the I/O devices 130 may include one or more display devices). Accordingly, the I/O devices 130 and/or the I/O controller 128 may include any type and/or form of suitable hardware, software, or combination of hardware and software to support, enable, and/or provide for the connection and use of the one or more display devices by the computing device 114. For example, the computing device 114 may include any type and/or form of video adapter, video card, driver, and/or library to interface, communicate, connect, and/or otherwise use the one or more display devices.

In some implementations, a video adapter may include multiple connectors to interface to the one or more display devices. In some implementations, the computing device 114 may include multiple video adapters, with each video adapter connected to the one or more display devices. In some implementations, any portion of the OS 122a of the computing device 114 may be configured for using multiple display devices. In some implementations, an I/O device (e.g., of the I/O devices 130) may be a bridge between the bus 116 and an external communication bus, such as a USB bus, an Apple Desktop Bus, an RS-232 serial connection, a SCSI bus, a FireWire bus, a FireWire 800 bus, an Ethernet bus, an AppleTalk bus, a Gigabit Ethernet bus, an asynchronous transfer mode bus, a FibreChannel bus, a fiber optic bus, a serial attached small computer system interface bus, a USB connection, and/or an HDMI bus.

In some implementations, an OS (e.g., the OS 122a) may control the computing device 114. For example, the OS may control scheduling of tasks and/or access to resources (e.g., system resources). The computing device 114 may run any suitable OS, such as any suitable version of MICROSOFT WINDOWS OSs, Unix OSs, Linux OSs, MAC OSs (e.g., for Macintosh computers), any embedded operating system, any real-time operating system, any open source operating system, any proprietary operating system, any operating systems for mobile computing devices, and/or any other operating system capable of running on the computing device 114 and performing the operations described herein.

In some implementations, the computing device 114 may be any type of computing, telecommunications, and/or media device (e.g., including one or more processors, memories, OSs, and/or I/O devices, among other examples) capable of communication and that has sufficient processor power and memory capacity to perform the operations described herein. For example, the computing device 114 may be a workstation, a telephone, a desktop computer, a laptop, a server, a handheld computer, a mobile phone, a tablet, a personal digital assistant (PDA), a media player, a gaming system, and/or a mobile computing device, among other examples.

In some implementations, the computing device 114 may perform one or more operations or processes described herein. For example, a non-transitory computer-readable medium (e.g., the memory 120) may store a set of instructions (e.g., one or more instructions or code) for execution by the processor 118. The processor 118 may execute the set of instructions to perform one or more operations or processes described herein. In some implementations, execution of the set of instructions, by one or more processors (e.g., the processor 118), causes the one or more of the processors and/or the computing device 114 to perform one or more operations or processes described herein. In some implementations, hardwired circuitry may be used instead of or in combination with the instructions to perform one or more operations or processes described herein. Additionally, or alternatively, the processor 118 may be configured to perform one or more operations or processes described herein. Thus, implementations described herein are not limited to any specific combination of hardware circuitry and software.

The number and arrangement of components shown in Figs 1B-1C. are provided as an example. The computing device 114 may include additional components, fewer components, different components, or differently arranged components than those shown in Figs. 1B-1C. Additionally, or alternatively, a set of components (e.g., one or more components) of the computing device 114 may perform one or more functions described as being performed by another set of components of the computing device 114.

Aspects of the example environment and the example device described above will become apparent in the context of the systems and methods disclosed herein.

In a wireless network (e.g., a Wi-Fi^{®} network operating according to IEEE 802.11 standards, among other examples), an AP typically utilizes an SSID to identify the wireless network. For authentication and authorization, the SSID is typically associated with security credentials (e.g., a passphrase or a security key). The AP periodically broadcasts beacons (e.g., beacon frames) that contain information about the wireless network, including the SSID and a basic service set identifier (BSSID). The BSSID which is a unique identifier for a basic service set (BSS) corresponding to the SSID and is typically derived from a medium access control (MAC) address of a wireless interface of the AP. This enables STAs to identify and associate with the AP managing the wireless network.

For example, an STA may discover the wireless network either passively, by listening for a periodic beacon, or actively, by sending a probe request (e.g., a probe request frame) to the AP. In response, the AP may transmit a probe response (e.g., a probe response frame) containing the SSID and the BSSID, enabling the STA to identify the wireless network and the AP serving the wireless network.

After discovering the wireless network, the STA may transmit, to the AP, a request (e.g., an authentication request) to join the wireless network. If the security credentials provided by the STA are valid, the AP and the STA may proceed through authentication and/or association phases to establish a secure connection. During the authentication and/or the association phases, the SSID and the security credentials may be used to mutually authenticate and authorize both the AP and the STA, ensuring a secure communication link is established.

When an AP is configured to support multiple virtual networks (e.g., multiple virtual wireless networks), the AP typically assigns distinct parameters, such as distinct BSSIDs, SSIDs, and security credentials, to the multiple virtual networks. To manage the multiple virtual networks, the AP periodically transmits separate management frames for each wireless network.

However, transmitting the separate management frames for each wireless network supported by the AP increases management traffic and contributes to congestion on a shared communication medium used to transmit the separate management frames. If the AP supports multi-link operation (MLO) and/or multi-band operation, the congestion caused by these management frames occurs across each band supported by the AP, further compounding the issue.

Additionally, because the management frames are typically transmitted at a lowest data rate supported by the AP (e.g., 1 megabit per second (Mbps) or 6 Mbps), transmission times of the management frames are extended relative to other frames transmitted at a higher data rate supported by the AP. This leads to increased power consumption for both the AP and associated STAs.

Furthermore, scheduling and transmission of the management frames (e.g., at the lowest data rate supported by the AP), typically at a lowest data rate supported by the AP, negatively impacts both power usage and network performance. Additionally, the management frames occupy the communication medium for prolonged periods, reducing an available bandwidth for user data. This leads to degraded throughput, increased delays, jitter, and reduced latency of data traffic, which negatively affects network performance.

Some implementations described herein enable multiple SSID isolation on a network. For example, an AP may establish a multiple SSID network environment including multiple virtual networks utilizing a single BSSID and SSID information that does not indicate unique SSIDs of the virtual networks. Additionally, or alternatively, the AP may maintain an association identifier (AID) domain that is shared across the multiple virtual networks. Because the AID domain may be shared across the multiple virtual networks, the AP 205 may assign AIDs, selected from the AID domain, to STAs, as described in more detail elsewhere herein.

In this way, the AP may transmit a single beacon indicating the BSSID and the SSID information to announce a presence of the multiple virtual networks without indicating the SSIDs of the multiple virtual networks. Although the SSIDs are not indicated in the beacon, the SSID information enables STAs to connect to an appropriate virtual network supported by the AP (e.g., the STAs may be preconfigured with the SSIDs of the multiple virtual networks and security credentials corresponding to the SSIDs).

As a result, a communication medium used to transmit the beacon is less congested relative to a typical AP that transmits separate beacons for each virtual network supported by the AP. Furthermore, because the SSID information does not indicate the SSIDs of the multiple virtual networks, the communication medium is not congested with discovery attempts from unknown or unwanted STAs.

Accordingly, some implementations described herein not only enhance privacy among various STAs but also enable the AP to conserve power by eliminating low data rate traffic. Furthermore, some implementations described herein avoid a need to schedule multiple beacons around a same target beacon transmission time (TBTT) and avoid a need to send multiple probe responses to STAs (e.g., at a same time). Additionally, AID/traffic indication map (TIM) scheduling become less complex, because a common beacon may be utilized to indicate data availability information associated with the STAs (e.g., by indicating AIDs that are assigned from the AID domain that is shared across the multiple virtual networks).

Furthermore, power consumption of STAs is minimized because STAs do not need to wake up for extended periods when the AP transmits unintended beacons. Reducing slow-moving management frame exchanges in the communication medium also helps data frames achieve better latency. Additionally, the AP may support multiple security protocols, each of which may use different ciphers (e.g., ciphers associated with WPA2, WPA3, and/or WPS security protocols), enabling the AP to serve both enterprise and personal networks.

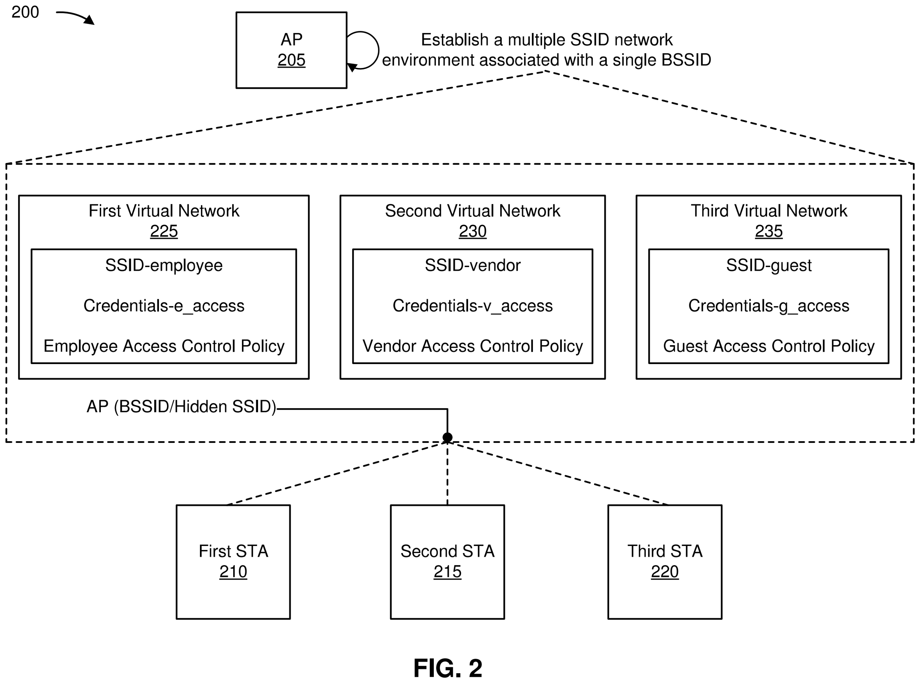

Fig. 2 is a diagram of an example 200 associated with multiple SSID isolation on a network. As shown in Fig. 2, the example 200 includes an AP 205, a first STA 210, a second STA 215, a third STA 220, a first virtual network 225, a second virtual network 230, and a third virtual network 235.

The AP 205 may utilize a BSSID (e.g., a MAC address associated with a wireless interface of the AP 205, among other examples) to identify a BSS, which represents a wireless network (e.g., a Wi-Fi^{®} network) managed by the AP 205. As shown in Fig. 2, the AP 205 may establish a multiple SSID network environment associated with a single BSSID, as described in more detail elsewhere herein.

In some implementations, the AP 205 may create multiple virtual networks (e.g., multiple virtual wireless networks), such as the first virtual network 225, the second virtual network 230, and the third virtual network 235 shown in Fig. 2, to isolate the wireless network. For example, the AP 205 may create the multiple virtual networks to isolate the wireless network between multiple target groups associated with an enterprise (e.g., an organization), while still operating as a single physical network device. For example, the AP 205 may create the multiple virtual networks to isolate the wireless network between a first target group (e.g., a group of employees associated with the enterprise), a second target group (e.g., a group of vendors associated with the enterprise), and a third target group (e.g., a group of guests associated with the enterprise).

Accordingly, the AP 205 may assign the first virtual network 225 to the first target group, the second virtual network 230 to the second target group, and the third virtual network 235 to the third target group. In other words, the first virtual network 225 may represent an employee network, the second virtual network 230 may represent a vendor network, and the third virtual network 235 may represent a guest network associated with the enterprise.

In some implementations, the AP 205 may assign a first unique SSID to the first virtual network 225 (e.g., shown as an SSID of "employee" in Fig. 2), a second unique SSID to the second virtual network 230 (e.g., shown as an SSID of "vendor" in Fig. 2), and a third unique SSID to the third virtual network (e.g., shown as an SSID of "guest" in Fig. 2). Accordingly, each unique SSID, of the unique SSIDs, may correspond to a different virtual network, enabling the AP 205 to separately identify and manage each target group of the multiple target groups.

In some implementations, the AP 205 may configure the unique SSIDs with unique security credentials (e.g., to ensure appropriate access for each target group of the multiple target groups). For example, the AP 205 may configure the first unique SSID with first unique security credentials (e.g., shown as security credentials of "e_access" in Fig. 2), the second unique SSID with second unique security credentials (e.g., shown as security credentials of "v_access" in Fig. 2), and the third unique SSID with third unique security credentials (e.g., shown as security credentials of "g_access" in Fig. 2). The unique security credentials may correspond to one or more security protocols, such as one or more Wi-Fi protected access 2 (WPA2), Wi-Fi protected access 3 (WPA3), and/or Wi-Fi protected setup (WPS) security protocols, that match the access requirements of each target group of the multiple target groups.

**In** some implementations, the AP 205 may enforce unique access control policies (e.g., based on the unique SSIDs and the unique security credentials corresponding to the multiple virtual networks). In this way, the AP 205 may use the unique access control policies to ensure that each target group, of the multiple target groups, is provided with an appropriate level of access and/or protection.

For example, the AP 205 may enforce a first unique access control policy (e.g., shown as an "employee access control policy" in Fig. 2) based on the first unique SSID and the first unique security credentials, a second unique access control policy (e.g., shown as a "vendor access control policy" in Fig. 2) based on the second unique SSID and the second unique security credentials, and a third unique access control policy (e.g., shown as a "guest access control policy" in Fig. 2) based on the third unique SSID and the third unique security credentials.

The employee access control policy may use enterprise-level security protocols, such as WPA2-enterprise or WPA3-enterprise, which leverage an extensible authentication protocol (EAP) for user-specific authentication. The enterprise-level security protocols may be integrated with a remote authentication dial-in user service (RADIUS) server for centralized management. Accordingly, the AP 205 may apply the employee access control policy to ensure that only authorized personnel with verified individual credentials may access the employee network, providing protection for sensitive enterprise resources.

**In** contrast, the vendor access control policy may utilize personal-level security protocols, such as WPA2-personal or WPA3-personal, which rely on a shared passphrase for authentication. While less stringent than enterprise-level protocols, the AP 205 may implement the personal-level protocols to ensure that only users with valid passphrases may access the vendor network. Additionally, the vendor access control policy may restrict access to specific resources, such as limiting vendor devices (e.g., STAs used by vendors) to general network services or internet access while preventing access to internal applications or sensitive enterprise data.

For the guest network, the AP 205 may configure open authentication or use a captive portal for access control. In this scenario, guest devices (e.g., STAs used by guests) may authenticate through the captive portal by agreeing to terms of service or entering a temporary passphrase. Simplified connection methods, such as WPS, may also be employed to enable quick and easy network access with minimal credentials. However, the AP 205 may isolate the guest network from an infrastructure of the enterprise, ensuring that guest traffic cannot interact with sensitive resources and maintaining security of the internal enterprise systems.

In this way, the AP 205 may manage access to the first virtual network 225, the second virtual network 230, and/or the third virtual network 235 by enforcing the unique access control policies for each target group, of the multiple target groups. This enables the AP 205 to provide security for employees accessing sensitive enterprise systems, controlled access for vendors requiring limited network resources, and simplified yet secure connectivity for guests, all while maintaining isolation and protecting infrastructure from unauthorized access.

Accordingly, and in some implementations, the AP 205 may enforce the unique access control policies based on the unique SSIDs and the unique security credentials, as described in more detail elsewhere herein. For example, if the first STA 210 is utilized by an employee associated with the enterprise, the AP 205 may enforce the first unique access control policy (e.g., the employee access control policy) based on the first unique SSID (e.g., employee) and the first unique security credentials (e.g., e_access). As another example, if the second STA 215 is utilized by a vendor associated with the enterprise, the AP 205 may enforce the second unique access control policy (e.g., the vendor access control policy) based on the second unique SSID (e.g., vendor) and the second unique security credentials (e.g., v_access). As yet another example, if the third STA 220 is utilized by a guest associated with the enterprise, the AP 205 may enforce the third unique access control policy (e.g., the guest employee access control policy) based on the third unique SSID (e.g., guest) and the third unique security credentials (e.g., g_access).

In some implementations, the AP 205 may assign the BSSID to the multiple virtual networks. For example, the AP 205 may assign the BSSID to the first virtual network 225, the second virtual network 230, and the third virtual network 235.

In some implementations, STAs may be authorized (e.g., preconfigured with the unique SSIDs and the unique security credentials) to connect to the multiple virtual networks. For example, the first STA 210 may be authorized (e.g., preconfigured with the first unique SSID and the first unique security credentials) to connect to the first virtual network 225, the second STA 215 may be authorized (e.g., preconfigured with the second unique SSID and the second unique security credentials) to connect to the second virtual network 230, and the third STA 220 may be authorized (e.g., preconfigured with the third unique SSID and the third unique security credentials) to connect to the third virtual network 235.

In some implementations, the AP 205 may indicate, in beacons transmitted by the AP 205, the BSSID and SSID information that does not indicate the unique SSIDs of the multiple virtual networks but enables authorized STAs to connect to appropriate virtual networks managed by the AP 205. For example, the AP 205 may indicate, in beacons transmitted by the AP 205, the BSSID and a wildcard SSID that does not indicate the unique SSIDs of the multiple virtual networks but enables the first STA 210 to connect to the first virtual network 225, the second STA 215 to connect to the second virtual network 230, and/or the third STA 220 to connect to the third virtual network 235. As another example, the AP 205 may indicate, in beacons transmitted by the AP 205, the BSSID and an indicator (e.g., a null value indicated in an SSID field of an SSID information element (IE)) that the AP 205 is associated with one or more wireless networks (e.g., one or more virtual networks).

Because the STAs (e.g., the first STA 210, the second STA 215, and/or the third STA 220) may be preconfigured with the unique SSIDs and the unique security credentials, the STAs may identify, discover, and connect to appropriate virtual networks. In this way, the STAs may connect to appropriate virtual networks without the unique SSIDs being publicly broadcasted.

Additionally, because the AP 205 may maintain AID domain that is shared across the multiple virtual networks. Accordingly, for example, the AP 205 may assign AIDs, selected from the AID domain that is shared across the multiple virtual networks, to STAs (e.g., the first STA 210, the second STA 215, and/or the third STA 220), as described in more detail elsewhere herein. In this way, the AP 205 may indicate data availability information using a single beacon (e.g., by indicating AIDs that are assigned from the AID domain that is shared across the multiple virtual networks) irrespective of the target group to which an STA is associated with.

In this way, the AP 205 may support multiple SSID isolation on a network (e.g., by using a single BSSID and SSID information that does not indicate unique SSIDs of multiple virtual networks supported and/or managed by the AP 205). This enables the AP 205 to support multiple security protocols, each of which may use different ciphers (e.g., ciphers associated with WPA2, WPA3, and/or WPS security protocols), as described in more detail elsewhere herein.

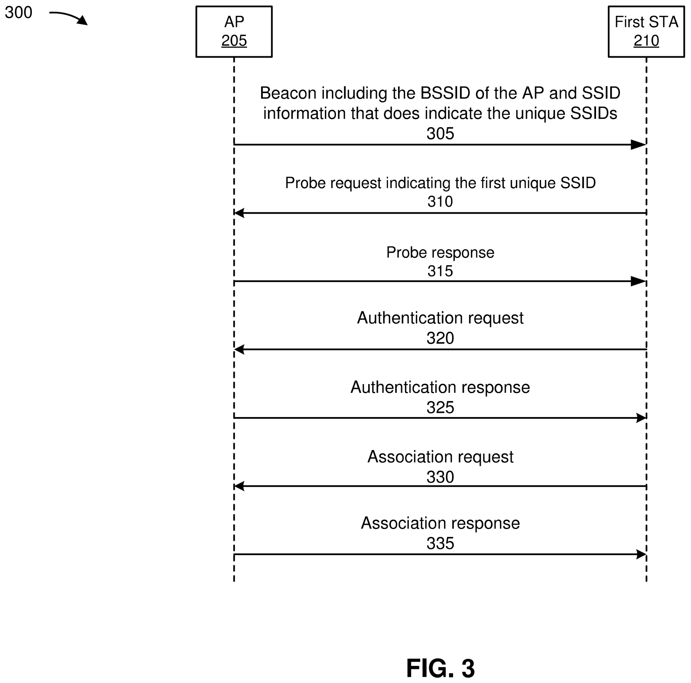

Fig. 3 is an example sequence diagram 300 associated with multiple SSID isolation on a network. As shown in Fig. 3, the sequence diagram 300 is associated with communication between the AP 205 and the first STA 210, which is associated with the first target group (e.g., the first STA 210 is utilized by an employee associated with the enterprise). Accordingly, the first STA 210 is authorized to join the first virtual network 225. The first unique SSID, the first unique security credentials, and the first unique access control policy may be used to establish a secure connection between the AP 205 and the first STA 210, as described in more detail elsewhere herein.

As shown in Fig. 3, and by reference number 305, the AP 205 may transmit, and the first STA 210, may receive, a beacon including the BSSID and SSID information that does not indicate the unique SSIDs of the multiple virtual networks. For example, the beacon may include beacon data that indicates the BSSID of the AP 205 and at least one of a wildcard SSID (e.g., that does not indicate the first unique SSID, the second unique SSID, nor the third unique SSID) or an indicator indicating that the AP 205 is associated with one or more virtual networks (e.g., the first virtual network 225, the second virtual network 230, and the third virtual network 235).

In some implementations, the first virtual network 225, the second virtual network 230, and the third virtual network 235 may be configured as hidden virtual networks, and the indicator may be a hidden SSID indicator indicating that the AP 205 is associated with the first virtual network 225, the second virtual network 230, and the third virtual network 235.

In some implementations, hidden virtual networks may refer to virtualized network instances that do not publicly broadcast an SSID, requiring preconfigured devices (e.g., the first STA 210, the second STA 215, and/or the third STA 220) to identify and establish a connection using credentials and discovery mechanisms, as described in more detail elsewhere herein. In some implementations, a hidden SSID indicator may refer to a signaling mechanism or data field that conveys a presence of the hidden virtual networks (e.g., the first virtual network 225, the second virtual network 230, and the third virtual network 235) associated with the AP 205. For example, the hidden SSID indicator may be a null field in an SSID information element included in frames transmitted by the AP 205.

The first STA 210 may process the beacon to identify the first virtual network 225 (e.g., the employee network). For example, because the first STA 210 is preconfigured with the first unique SSID (e.g., employee), the first STA 210 may identify the AP 205 based on the BSSID. The first STA 210 may generate a probe request including an indication of the first unique SSID based on identifying the AP 205 using the BSSID. The probe request may be used to initiate communication with the AP 205 and confirm that the first virtual network 225 is available (e.g., even though the first unique SSID is not publicly advertised).

As further shown in Fig. 3, and by reference number 310, the first STA 210 may transmit, and the AP 205 may receive, a probe request indicating the first unique SSID (e.g., employee). The AP 205 may process the probe request to confirm that the first virtual network 225 is available. The AP 205 may generate a probe response indicating that the first virtual network 225 is available.

As further shown in Fig. 3, and by reference number 315, the AP 205 may transmit, and the first STA 210 may receive, the probe response indicating that the first virtual network 225 is available. The first STA 210 may generate, based on the probe response, an authentication request indicating the first unique SSID and the first unique security credentials (e.g., e_access). If the AP 205 utilizes the WPA3 security protocol for establishing connections to the first virtual network 225, the authentication request may be an authentication frame indicating the first unique SSID in an SSID IE field of the authentication frame (e.g., the SSID IE is mandatory in WPA3).

As further shown in Fig. 3, and by reference number 320, the first STA 210 may transmit, and the AP 205 may receive, the authentication request. The AP 205 may process the authentication request to determine whether the first unique SSID is valid (e.g., based on determining that the first unique SSID matches the "employee" SSID preconfigured on the AP 205). Based on determining that the first unique SSID is valid, the AP 205 may proceed to a WPA3 authentication phase.

During the WPA3 authentication phase, the AP 205 may perform a simultaneous authentication of equals (SAE) handshake, which includes using a key exchange mechanism to ensure a secure connection. For example, the AP 205 may verify the first unique security credentials against security settings of the first virtual network 225. If the authentication is successful, the AP 205 may generate an authentication response indicating a successful authentication (e.g., of the first STA 210).

As further shown in Fig. 3, and by reference number 325, the AP 205 may transmit, and the first STA 210 may receive, the authentication response indicating the successful authentication. The first STA 210 may generate, based on the successful authentication, an association request indicating a request to associate to the AP 205.

As further shown in Fig. 3, and by reference number 330, the first STA 210 may transmit, and the AP 205 may receive, the association request. The AP 205 may perform, based on the association request, a connection establishment procedure. For example, the AP 205 may enforce the first unique access control policy (e.g., the employee access control policy). The AP 205 may grant the first STA 210 access to the first virtual network 225, which may include permissions specific to employees (e.g., access to internal resources, printers, and/or workstations, among other examples). As further shown in Fig. 3 and by reference number 335, the AP 205 may transmit, and the first STA 210 may receive, an association response confirming that the first STA 210 has network access to the first virtual network 225 (e.g., based on the first access control policy).

As indicated above, Fig. 3 is provided as an example. Other examples may differ from what is described with regard to Fig. 3.

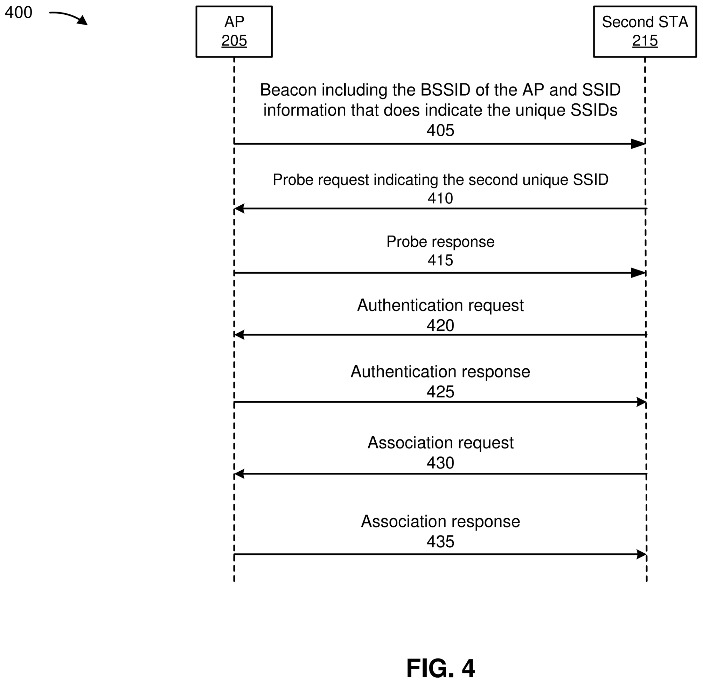

Fig. 4 is an example sequence diagram 400 associated with multiple SSID isolation on a network. As shown in Fig. 4, the sequence diagram 400 is associated with communication between the AP 205 and the second STA 215, which is associated with the second target group (e.g., the second STA 215 is utilized by a vendor associated with the enterprise). Accordingly, the second STA 215 is authorized to join the second virtual network 230. The second unique SSID, the second unique security credentials, and the second unique access control policy may be used to establish a secure connection between the AP 205 and the second STA 215, as described in more detail elsewhere herein.

As shown in Fig. 4, and by reference number 405, the AP 205 may transmit, and the second STA 215, may receive, a beacon including the BSSID and SSID information that does not indicate the unique SSIDs, as described in more detail elsewhere herein. The second STA 215 may process the beacon to identify the second virtual network 230. For example, because the second STA 215 is preconfigured with the second unique SSID (e.g., vendor), the second STA 215 may identify the AP 205 based on the BSSID. The second STA 215 may generate a probe request including an indication of the second unique SSID based on identifying the AP 205 using the BSSID. The probe request may be used to initiate communication with the AP 205 and confirm that the second virtual network 230 is available (e.g., even though the second unique SSID is not publicly advertised).

As further shown in Fig. 4, and by reference number 410, the second STA 215 may transmit, and the AP 205 may receive, a probe request indicating the second unique SSID. The AP 205 may process the probe request to confirm that the second virtual network 230 is available. The AP 205 may generate a probe response indicating that the second virtual network 230 is available.

As further shown in Fig. 4, and by reference number 415, the AP 205 may transmit, and the second STA 215 may receive, the probe response indicating that the second virtual network 230 is available. The second STA 215 may generate, based on the probe response, an authentication request indicating the second unique SSID and the second unique security credentials (e.g., v_access).

As further shown in Fig. 4, and by reference number 420, the second STA 215 may transmit, and the AP 205 may receive, the authentication request. If the AP 205 utilizes the WPA2 security protocol for establishing connections to the second virtual network 230, the authentication request may be an authentication frame indicating the second unique SSID in an SSID IE field of the authentication frame. However, because the AP 205 utilizes the WPA2 security protocol for establishing connections the second virtual network 230, appending the SSID IE in the authentication frame is not mandatory, as credential validation does not occur in the authentication phase in WPA2.

The AP 205 may determine whether the second unique SSID is valid (e.g., based on determining that the second unique SSID matches the "vendor" SSID preconfigured on the AP 205). Based on determining that the second unique SSID is valid, the AP 205 may proceed to a WPA2 authentication phase.

During the WPA2 authentication phase, the AP 205 and second STA 215 may perform a four-way handshake, which includes an exchange of cryptographic keys to establish a secure connection. For example, the AP 205 may verify that the second unique security credentials match security settings of the second virtual network 230. If the authentication is successful, the AP 205 may generate an authentication response indicating a successful authentication (e.g., of the second STA 215).

As further shown in Fig. 4, and by reference number 425, the AP 205 may transmit, and the second STA 215 may receive, the authentication response indicating the successful authentication. The second STA 215 may generate, based on the successful authentication, an association request indicating a request to associate to the AP 205.

As further shown in Fig. 4, and by reference number 430, the second STA 215 may transmit, and the AP 205 may receive, the association request. The AP 205 may perform, based on the successful authentication, a connection establishment procedure. For example, the AP 205 may enforce the second unique access control policy (e.g., the vendor access control policy). The AP 205 may grant the second STA 215 access to the second virtual network 230, which may include permissions specific to vendors, such as access to vendorspecific resources or external network interfaces. As further shown in Fig. 4 and by reference number 435, the AP 205 may transmit, and the second STA 215 may receive, an association response that the second STA 215 has network access to the second virtual network 230 (e.g., based on the second access control policy).

As indicated above, Fig. 4 is provided as an example. Other examples may differ from what is described with regard to Fig. 4.

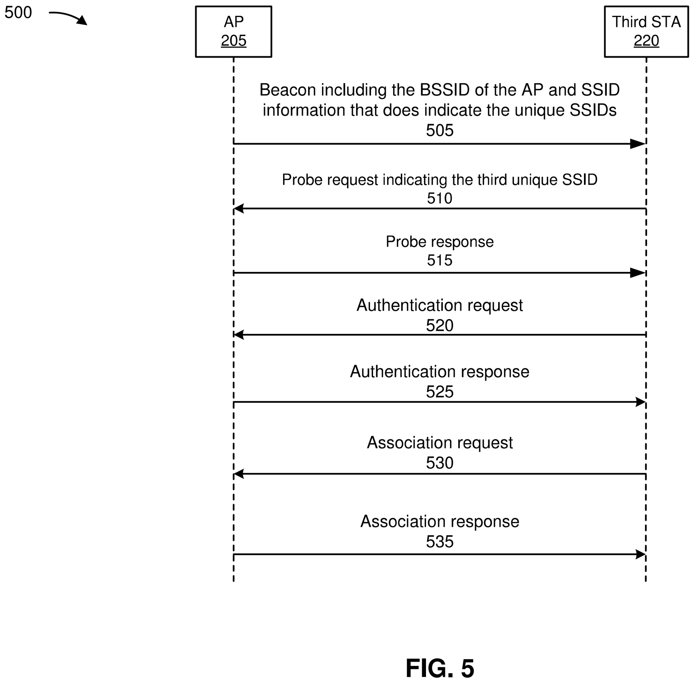

Fig. 5 is an example sequence diagram 500 associated with multiple SSID isolation on a network. As shown in Fig. 5, the sequence diagram 500 is associated with communication between the AP 205 and the third STA 220, which is associated with the third target group (e.g., the third STA 220 is utilized by a guest associated with the enterprise). Accordingly, the third STA 220 is authorized to join the third virtual network 235. The third unique SSID, the third unique security credentials, and the third unique access control policy may be used to establish a secure connection between the AP 205 and the third STA 220, as described in more detail elsewhere herein.

As shown in Fig. 5, and by reference number 505, the AP 205 may transmit, and the second STA 215, may receive, a beacon including the BSSID and SSID information that does not indicate the unique SSIDs, as described in more detail elsewhere herein. The third STA 220 may process the beacon to identify the third virtual network 235. For example, because the third STA 220 is preconfigured with the third unique SSID (e.g., guest), the third STA 220 may identify the AP 205 based on the BSSID.

The third STA 220 may generate a probe request indicating the third unique SSID (e.g., based on identifying the AP 205 using the BSSID). The probe request may be used to initiate communication with the AP 205 and confirm that the third virtual network 240 is available (e.g., even though the SSID may not be publicly advertised).

As further shown in Fig. 5, and by reference number 510, the third STA 220 may transmit, and the AP 205 may receive, the probe request indicating the third unique SSID. The AP 205 may process the probe request to confirm that the third virtual network 235 is available. The AP 205 may generate a probe response indicating that the third virtual network 235 is available.

As further shown in Fig. 5, and by reference number 515, the AP 205 may transmit, and the third STA 220 may receive, the probe response indicating that the third virtual network 235 is available. The third STA 220 may generate an authentication request based on the probe response. If the AP 205 supports the WPS security protocol for establishing connections to the third virtual network 235, the authentication request may indicate the third unique SSID and a request for WPS authentication. The third STA 220 may include WPS information in the authentication frame (e.g., WPS information associated with a push-button method or a PIN method). For example, the authentication request may indicate the third unique SSID and a request for WPS authentication.

As further shown in Fig. 5, and by reference number 520, the third STA 220 may transmit, and the AP 205 may receive, the authentication request. The AP 205 may initiate, based on the authentication request, the authentication process. For example, the AP 205 may process the WPS authentication request by verifying the WPS information and ensuring that settings associated with the third virtual network 235 match preconfigured security settings for the third virtual network 235.

If the WPS authentication is successful, the AP 205 may generate an authentication response indicating a successful authentication (e.g., of the third STA 220). As further shown in Fig. 5, and by reference number 525, the AP 205 may transmit, and the third STA 220 may receive, the authentication response indicating the successful authentication. The third STA 220 may generate, based on the successful authentication, an association request indicating a request to associate to the AP 205.

As further shown in Fig. 5, and by reference number 530, the third STA 220 may transmit, the association request. The AP 205 may perform, based on the association request, a connection establishment procedure. For example, the AP 205 may enforce the third unique access control policy (e.g., the guest access control policy) and grant the third STA 220 access to the third virtual network 235. The permissions may include limited access to the internet or other guest-specific resources, ensuring that the third STA 220 has isolated access from the enterprise network. As further shown in Fig. 5, and by reference number 535, the AP 205 may transmit, and the third STA 220 may receive, an association response that the third STA 220 has network access to the third virtual network 235 (e.g., based on the third access control policy).

As indicated above, Fig. 5 is provided as an example. Other examples may differ from what is described with regard to Fig. 5.

Accordingly, the AP 205 may establish a multiple SSID network environment including multiple virtual networks utilizing a single BSSID and SSID information that does not indicate unique SSIDs of the virtual networks. In this way, the AP 205 may transmit a single beacon indicating the BSSID and the SSID information to announce a presence of the multiple virtual networks without indicating the SSIDs of the multiple virtual networks.

Although the SSIDs are not indicated in the beacon, the SSID information enables STAs to connect to an appropriate virtual network supported by the AP (e.g., the first STA 210 may be preconfigured with the first unique SSID and the first unique security credentials to enable a secure connection to the first virtual network 225, the second STA 215 may be preconfigured with the second unique SSID and the second unique security credentials to enable a secure connection to the second virtual network 230, and/or the third STA 220 may be preconfigured with the third unique SSID and the third unique security credentials to enable a secure connection to the third virtual network 235).

As a result, a communication medium used to transmit the beacon is less congested relative to a typical AP that transmits separate beacons for each virtual network supported by the typical AP. Furthermore, because the SSID information does not indicate the SSIDs of the multiple virtual networks, the communication medium is not congested with discovery attempts from unknown or unwanted STAs.

Accordingly, some implementations described herein not only enhance privacy among various STAs but also enable the AP 205 to conserve power by eliminating low data rate traffic. Furthermore, some implementations described herein avoid a need to schedule multiple beacons around a same target beacon transmission time (TBTT) and avoid a need to send multiple probe responses to STAs (e.g., at a same time). Additionally, AID/TIM scheduling become less complex, because a common beacon may be utilized for the multiple virtual networks supported by the AP 205.

Furthermore, power consumption of STAs (e.g., the first STA 210, the second STA 215, and/or the third STA 220) is minimized because the STAs do not need to wake up for extended periods when the AP 205 transmits unintended beacons. Reducing slow-moving management frame exchanges in the communication medium also helps data frames achieve better latency. Additionally, the AP 205 may support multiple security protocols, each of which may use different ciphers (e.g., ciphers associated with WPA2, WPA3, and/or WPS security protocols), enabling the AP to serve both enterprise and personal networks.

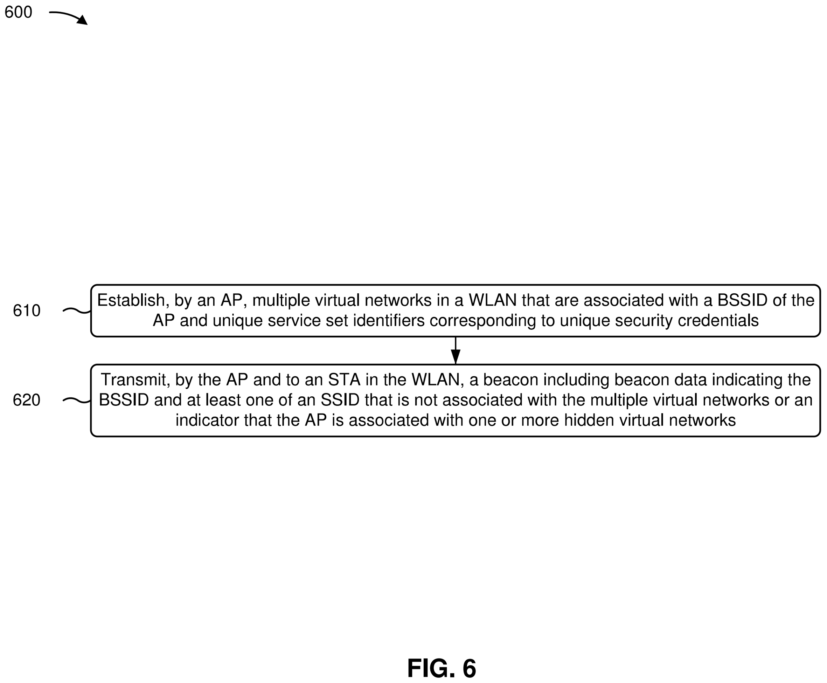

Fig. 6 is a flowchart of an example process 600 associated with multiple SSID isolation on a network. In some implementations, one or more process blocks of Fig. 6 may be performed by an AP (e.g., the network device 104 and/or the AP 205). In some implementations, one or more process blocks of Fig. 6 may be performed by another device, or a group of devices, separate from or including the AP, such as an STA (e.g., the wireless communication device 106, the first STA 210, the second STA 215, and/or the third STA 220). Additionally, or alternatively, one or more process blocks of Fig. 6 may be performed by one or more components of the computing device 114.

As shown in Fig. 6, the process 600 may include establishing, by the AP, multiple virtual networks in a WLAN that are associated with a BSSID of the AP and unique service set identifiers corresponding to unique security credentials (block 610). For example, the AP may establish multiple virtual networks in a WLAN that are associated with a BSSID of the AP and unique service set identifiers corresponding to unique security credentials, as described in more detail elsewhere herein.

As further shown in Fig. 6, the process 600 includes transmitting, by the AP and to an STA in the WLAN, a beacon including beacon data indicating the BSSID and at least one of an SSID that is not associated with the multiple virtual networks or an indicator that the AP is associated with one or more virtual networks (block 620). For example, the AP may transmit, to an STA in the WLAN, a beacon including beacon data indicating the BSSID and at least one of an SSID that is not associated with the multiple virtual networks or an indicator that the AP is associated with one or more virtual networks, as described in more detail elsewhere herein.

In some implementations, the AP may receive, from the STA, a request to discover a virtual network, of the multiple virtual networks, indicating a unique SSID of the virtual network. The AP may determine that the unique SSID is valid. The AP may transmit, to the STA and based on the unique SSID being valid, a response confirming that the virtual network is available.

In some implementations, the AP may receive, from the STA and after providing confirmation to the station that a virtual network, of the multiple virtual networks, is available, a request for authentication including an authentication frame indicating at least one of a unique SSID, of the virtual network, or unique security credentials corresponding to the unique SSID. The AP may perform, based on the at least one of the unique SSID or the unique security credentials, at least one of a WPA3 authentication procedure, a WPA2, or a WPS authentication procedure to authenticate the STA.

In some implementations, the AP may receive, from the STA and after the AP and the STA have performed a successful authentication procedure, a request to associate with the AP, for communication over a virtual network, of the multiple virtual networks, indicating a unique SSID of the virtual network. The AP may perform at least one of a WPA3 association procedure based on the unique SSID and the unique security credentials corresponding to the unique SSID, a WPA2 association procedure based on the unique security credentials, or a WPS association procedure based on the unique security credentials to associate with the STA. The AP may enforce, based on associating with the STA, a unique access control policy, corresponding to the unique SSID and the unique security credentials, for the virtual network.

In some implementations, the AP may assign, to the STA and during an association procedure related to a virtual network, of the multiple virtual networks, an AID that is selected from an AID domain that is shared across different virtual networks of the multiple virtual networks. The AP may transmit, to the STA, an indication of the AID.

In some implementations, the AP may assign, to the STA and during an association procedure related to associating the STA with the AP for communication over a first virtual network of the multiple virtual networks, an AID that is selected from an AID. The AP may assign, to a different STA and during a different association procedure related to associating the different STA with the AP over a different virtual network of the multiple virtual networks, a different AID that is selected from the AID domain.

In some implementations, the AP may indicate, in the beacon data, data availability indications corresponding to an AID, selected from an AID domain and identifying the STA, and a different AID, selected from the AID domain and identifying a different STA, indicating whether data is available for the STA and the different STA. The STA and the different STA may be connected to the AP on different virtual networks of the multiple virtual networks.

In some implementations, the AP may maintain an AID domain that is shared across different virtual networks of the multiple virtual networks. In some implementations, the AP may associate a first virtual network and a second virtual network, of the multiple virtual networks, with different target groups. In some implementations, the multiple virtual networks may include at least an enterprise virtual network and a personal virtual network.

In some implementations, the AP may configure at least a first virtual network, of the multiple virtual networks, with enhanced security settings compared to at least a second virtual network of the multiple virtual networks. In some implementations, the AP may configure at least a first virtual network, of the multiple virtual networks, with stricter access controls compared to at least a second virtual network of the multiple virtual networks.

In some implementations, the AP may indicate, in the beacon data, a data availability indication, corresponding to an AID of the STA, indicating that data is available for the STA. The AP may receive, from the STA, a power management indication indicating that the STA intends to transition from a power-save state to an active state. In some implementations, the power management indication may be a signaling mechanism used by the STA to inform the AP about a change in a power state, such as transitioning from a power-save state to an active state. This indication allows the AP to manage data transmission efficiently based on the power state of the STA.

In some implementations, a power-save state may refer to a mode where the STA minimizes power consumption by reducing activity of the STA or turning off one or more components, such as a radio of the STA, for a period of time. During this power-save state, the STA may periodically wake up to listen for management frames, such as beacons transmitted by the AP. In some implementations the active state may refer to a mode where the STA is operational (e.g., fully operational), such as to actively communicate with the AP (e.g., to exchange frames and/or data, among other examples).

Accordingly, the power management indication may allow the AP to manage data transmission efficiently based on the power state of the STA. For example, when a STA signals intent to switch to an active state, the AP may adjust its scheduling to promptly deliver buffered data or allocate resources accordingly. The AP may transmit, to the STA and based on the STA being in the active state, an indication of the data. In some implementations, each virtual network, of the multiple virtual networks, may be supported by a single BSS.

Although Fig. 6 shows example blocks of the process 600, in some implementations, the process 600 may include additional blocks, fewer blocks, different blocks, or differently arranged blocks than those depicted in Fig. 6. Additionally, or alternatively, two or more of the blocks of process 600 may be performed in parallel.

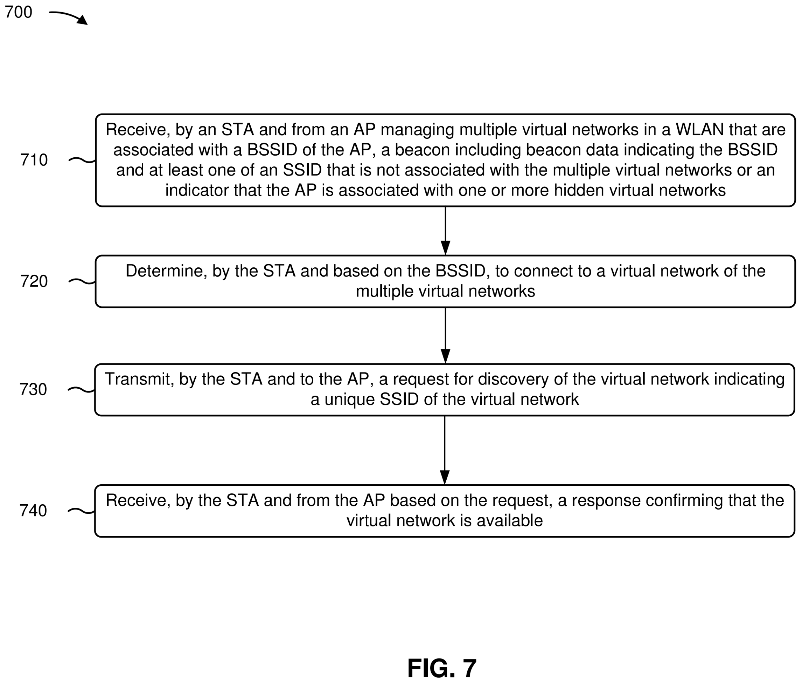

Fig. 7 is a flowchart of an example process 700 associated with multiple SSID isolation on a network. In some implementations, one or more process blocks of Fig. 7 may be performed by an STA (e.g., the wireless communication device 106, the first STA 210, the second STA 215, and/or the third STA 220). In some implementations, one or more process blocks of Fig. 6 may be performed by another device, or a group of devices, separate from or including the STA, such as an AP (e.g., the network device 104 and/or the AP 205). Additionally, or alternatively, one or more process blocks of Fig. 7 may be performed by one or more components of the computing device 114.

As shown in Fig. 7, the process 700 may include receiving, by an STA and from an AP managing multiple virtual networks in a WLAN that are associated with a BSSID of the AP, a beacon including beacon data indicating the BSSID and at least one of an SSID that is not associated with the multiple virtual networks or an indicator that the AP is associated with one or more virtual networks (block 710). For example, the STA may receive, from an AP managing multiple virtual networks in the WLAN that are associated with a BSSID of the AP, a beacon including beacon data indicating the BSSID and at least one of an SSID that is not associated with the multiple virtual networks or an indicator that the AP is associated with one or more virtual networks, as described in more detail elsewhere herein.

As further shown in Fig. 7, the process 700 may include determining, by the STA and based on the BSSID, to connect to a virtual network of the multiple virtual networks (block 720). For example, the STA may determine, based on the BSSID, to connect to a virtual network of the multiple virtual networks, as described in more detail elsewhere herein.

As further shown in Fig. 7, the process 700 may include transmitting, by the STA and to the AP, a request for discovery of the virtual network indicating a unique SSID of the virtual network (block 730). For example, the STA may transmit, to the AP, a request for discovery of the virtual network indicating a unique SSID of the virtual network, as described in more detail elsewhere herein.

As further shown in Fig. 7, the process 700 may include receiving, by the STA and from the AP based on the request, a response confirming that the virtual network is available (block 740). For example, the STA may receive from the AP based on the request, a response confirming that the virtual network is available, as described in more detail elsewhere herein.

In some implementations, the STA may transmit, to the AP and based on the virtual network being available, an authentication frame indicating at least one of a unique SSID, of the virtual network, or unique security credentials corresponding to the unique SSID. The STA may perform, based on the at least one of the unique SSID or the unique security credentials, at least one of a WPA3 authentication procedure, a WPA2 authentication procedure, or a WPS authentication procedure to authenticate the AP.

In some implementations, the STA may transmit, to the AP and after the STA and the AP have performed a successful authentication procedure, a request to associate with the AP for communication over a virtual network, of the multiple virtual networks, indicating a unique SSID of the virtual network. The STA may perform at least one of aWPA3 association procedure based on the unique SSID and unique security credentials corresponding to the unique SSID, a WPA2 association procedure based on the unique security credentials, or a WPS association procedure based on the unique security credentials to associate with the AP. The STA may receive, based on associating with the AP, access to the virtual network that is governed by a unique access control policy corresponding to the unique SSID and the unique security credentials.

In some implementations, the STA may receive, from the AP and during an association procedure related to a virtual network, of the multiple virtual networks, an indication of an AID that is selected from an AID domain that is shared across different virtual networks of the multiple virtual networks. In some implementations, the STA may receive the beacon according to a listen interval based on a power-save state of the STA. In some implementations, the listen interval may be a time period that the STA uses to determine how often to wake from a power-save state to listen for beacons transmitted by the AP. The listen interval helps balance power efficiency and timely data reception by allowing the STA to remain in a power-save state while ensuring it periodically checks for buffered data or network updates.

Although Fig. 7 shows example blocks of the process 700, in some implementations, the process 700 may include additional blocks, fewer blocks, different blocks, or differently arranged blocks than those depicted in Fig. 7. Additionally, or alternatively, two or more of the blocks of process 700 may be performed in parallel.

Accordingly, some implementations described herein may provide a method for multiple SSID identifier isolation on a WLAN. For example, the method may include creating, by a device, multiple virtual networks in the WLAN. The method may include assigning, by the device, a BSSID of a BSS supporting the multiple virtual networks to the multiple virtual networks. The method may include assigning, by the device, unique SSIDs to the multiple virtual networks. The method may include assigning, by the device, unique security credentials to the unique SSIDs. The method may include transmitting, by the device, a beacon associated with an AP managing the multiple virtual networks, including beacon data indicating the BSSID and at least one of an SSID that is not associated with the multiple virtual networks or an indicator indicating that the AP is associated with one or more virtual networks.

Additionally, the functionality of the elements described herein may be implemented using circuitry or processing circuitry, including general-purpose processors, special-purpose processors, integrated circuits, application-specific integrated circuits (ASICs), conventional circuitry, or combinations thereof, configured or programmed to perform the disclosed functionality. A processor is a type of processing circuitry, as it includes transistors and other physical circuit components. A processor may execute instructions stored in a memory, thereby operating as a programmed processor. In this disclosure, the terms "circuitry," "units," or "means" refer to hardware that performs, or is programmed to perform, the described functionality. Such hardware may include any disclosed hardware or other known hardware that is configured or programmed to execute the described functions. When the hardware includes a processor, which is a type of circuitry, the circuitry, means, or units refer to a combination of hardware and software, where the software configures the hardware and/or processor to perform the specified functions.

Even though particular combinations of features are recited in the claims and/or described in this disclosure, these combinations are not intended to limit the disclosure of various implementations. In fact, many of these features may be combined in ways not specifically recited in the claims and/or described in this disclosure. Although each dependent claim listed below may directly depend on only one claim, the disclosure of various implementations includes each dependent claim in combination with every other claim in the claim set.

When an element is referred to herein as being "connected" or "coupled" to another element, it should be understood that the elements can be directly connected to the other element or have intervening elements present between the elements. In contrast, when an element is referred to as being "directly connected" or "directly coupled" to another element, it should be understood that no intervening elements are present in the "direct" connection between the elements. However, the existence of a direct connection does not exclude other connections, in which intervening elements may be present.

As used herein, a phrase referring to "at least one of" a list of items refers to any combination of those items, including single members. As an example, "at least one of: a, b, or c" is intended to cover a, b, c, a-b, a-c, b-c, and a-b-c, as well as any combination with multiple of the same item.

As used herein, a phrase referring to "at least one of" a list of items refers to any combination and permutation of those items, including single members (e.g., an individual item in the list of items). As an example, "at least one of: a, b, or c" is intended to cover a, b, c, a-b, a-c, b-c, and a-b-c, as well as any combination with multiple of the same item. As used herein, the term "and/or" used to connect items in a list refers to any combination and any permutation of those items, including single members (e.g., an individual item in the list of items). As an example, "a, b, and/or c" is intended to cover a, b, c, a-b, a-c, b-c, and a-b-c.

No element, act, or instruction described herein should be construed as critical or essential unless explicitly described as such. Also, as used herein, the articles "a" and "an" are intended to include one or more items and may be used interchangeably with "one or more." Further, as used herein, the article "the" is intended to include one or more items referenced in connection with the article "the" and may be used interchangeably with "the one or more." Furthermore, as used herein, the term "set" is intended to include one or more items (e.g., related items, unrelated items, or a combination of related and unrelated items), and may be used interchangeably with "one or more." Where only one item is intended, the phrase "only one" or similar language is used herein. Also, as used herein, the terms "has," "have," "having," or the like are intended to be open-ended terms. Further, the phrase "based on" is intended to mean "based, at least in part, on" unless explicitly stated otherwise. Also, as used herein, the term "or" is intended to be inclusive when used in a series and may be used interchangeably with "and/or," unless explicitly stated otherwise (e.g., if used in combination with "either" or "only one of").

In the preceding specification, various example embodiments have been described with reference to the accompanying drawings. It will, however, be evident that various modifications and changes may be made thereto, and additional embodiments may be implemented, without departing from the broader scope of the invention as set forth in the claims that follow. The specification and drawings are accordingly to be regarded in an illustrative rather than restrictive sense.

## Claims

1. An access point in a wireless local area network, WLAN, the access point comprising:
circuitry configured to:
establish multiple virtual networks in the WLAN that are associated with a basic service set identifier of the access point and unique service set identifiers corresponding to unique security credentials;
transmit, to a station in the WLAN, a beacon including beacon data indicating the basic service set identifier and at least one of a service set identifier that is not associated with the multiple virtual networks or an indicator that the access point is associated with one or more virtual networks.

2. The access point of claim 1, wherein the circuitry is further configured to:
receive, from the station, a request to discover a virtual network, of the multiple virtual networks, indicating a unique service set identifier of the virtual network;
determine that the unique service set identifier is valid; and
transmit, to the station and based on the unique service set identifier being valid, a response confirming that the virtual network is available.

3. The access point of claim 1 or 2, wherein the circuitry is further configured to:
receive, from the station and after providing confirmation to the station that a virtual network, of the multiple virtual networks, is available, a request for authentication including an authentication frame indicating at least one of a unique service set identifier, of the virtual network, or unique security credentials corresponding to the unique service set identifier; and
perform, based on the at least one of the unique service set identifier or the unique security credentials, at least one of a Wi-Fi^{®} protected access 3 authentication procedure, a Wi-Fi^{®} protected access 2, or a Wi-Fi^{®} protected setup authentication procedure to authenticate the station.

4. The access point of any one of the claims 1 to 3, wherein the circuitry is further configured to:
receive, from the station and after the access point and the station have performed a successful authentication procedure, a request to associate with the access point, for communication over a virtual network, of the multiple virtual networks, indicating a unique service set identifier of the virtual network;
perform at least one of a Wi-Fi^{®} protected access 3 association procedure based on the unique service set identifier and the unique security credentials corresponding to the unique service set identifier, a Wi-Fi^{®} protected access 2 association procedure based on the unique security credentials, or a Wi-Fi^{®} protected setup association procedure based on the unique security credentials to associate with the station; and
enforce, based on associating with the station, a unique access control policy, corresponding to the unique service set identifier and the unique security credentials, for the virtual network.

5. The access point of any one of the claims 1 to 4, wherein the circuitry is further configured to:
assign, to the station and during an association procedure related to a virtual network, of the multiple virtual networks, an association identifier that is selected from an association identifier domain that is shared across different virtual networks of the multiple virtual networks; and
transmit, to the station, an indication of the association identifier.

6. The access point of any one of the claims 1 to 5, wherein the circuitry is further configured to:
assign, to the station and during an association procedure related to associating the station with the access point for communication over a first virtual network of the multiple virtual networks, an association identifier that is selected from an association identifier domain; and
assign, to a different station and during a different association procedure related to associating the different station with the access point over a different virtual network of the multiple virtual networks, a different association identifier that is selected from the association identifier domain.

7. The access point of any one of the claims 1 to 6, wherein the circuitry is further configured to:
indicate, in the beacon data, data availability indications corresponding to an association identifier, selected from an association identifier domain and identifying the station, and a different association identifier, selected from the association identifier domain and identifying a different station, indicating whether data is available for the station and the different station,
wherein the station and the different station are connected to the access point on different virtual networks of the multiple virtual networks.

8. The access point of any one of the claims 1 to 7, wherein the circuitry is further configured to:
maintain an association identifier domain that is shared across different virtual networks of the multiple virtual networks;
and/or
wherein the circuitry is further configured to:
associate a first virtual network and a second virtual network, of the multiple virtual networks, with different target groups.

9. The access point of any one of the claims 1 to 8, wherein
the multiple virtual networks include at least an enterprise virtual network and a personal virtual network.

10. The access point of any one of the claims 1 to 9, wherein the circuitry is further configured to:
configure at least a first virtual network, of the multiple virtual networks, with enhanced security settings compared to at least a second virtual network of the multiple virtual networks;
and/or
wherein the circuitry is further configured to:
configure at least a first virtual network, of the multiple virtual networks, with stricter access controls compared to at least a second virtual network of the multiple virtual networks;
and/or
wherein the circuitry is further configured to:
indicate, in the beacon data, a data availability indication, corresponding to an association identifier of the station, indicating that data is available for the station;
receive, from the station, a power management indication indicating that the station intends to transition from a power-save state to an active state; and
transmit, to the station and based on the station being in the active state, an indication of the data.

11. The access point of any one of the claims 1 to 10, wherein
each virtual network, of the multiple virtual networks, is supported by a single basic service set.

12. A station in a wireless local area network, WLAN, the station comprising:
circuitry configured to:
receive, from an access point managing multiple virtual networks in the WLAN that are associated with a basic service set identifier of the access point, a beacon including beacon data indicating the basic service set identifier and at least one of a service set identifier that is not associated with the multiple virtual networks or an indicator that the access point is associated with one or more virtual networks;
determine, based on the basic service set identifier, to connect to a virtual network of the multiple virtual networks;
transmit, to the access point, a request for discovery of the virtual network indicating a unique service set identifier of the virtual network; and
receive, from the access point and based on the request, a response confirming that the virtual network is available.

13. The station of claim 12, wherein the circuitry is further configured to:
transmit, to the access point and based on the virtual network being available, an authentication frame indicating at least one of a unique service set identifier, of the virtual network, or unique security credentials corresponding to the unique service set identifier; and
perform, based on the at least one of the unique service set identifier or the unique security credentials, at least one of a Wi-Fi^{®} protected access 3 authentication procedure, a Wi-Fi^{®} protected access 2 authentication procedure, or a Wi-Fi^{®} protected setup authentication procedure to authenticate the access point;
and/or
wherein the circuitry is further configured to:
transmit, to the access point and after the station and the access point have performed a successful authentication procedure, a request to associate with the access point for communication over a virtual network, of the multiple virtual networks, indicating a unique service set identifier of the virtual network;
perform at least one of a Wi-Fi^{®} protected access 3 association procedure based on the unique service set identifier and unique security credentials corresponding to the unique service set identifier, a Wi-Fi^{®} protected access 2 association procedure based on the unique security credentials, or a Wi-Fi^{®} protected setup association procedure based on the unique security credentials to associate with the access point; and
receive, based on associating with the access point, access to the virtual network that is governed by a unique access control policy corresponding to the unique service set identifier and the unique security credentials.

14. The station of claim 12 or 13, wherein
the circuitry is further configured to:
receive, from the access point and during an association procedure related to a virtual network, of the multiple virtual networks, an indication of an association identifier that is selected from an association identifier domain that is shared across different virtual networks of the multiple virtual networks;
and/or wherein
the beacon is received according to a listen interval based on a power-save state of the station.

15. A method for multiple service set identifier isolation on a wireless local area network, WLAN, the method comprising:
creating, by a device, multiple virtual networks in the WLAN;
assigning, by the device, a basic service set identifier of a basic service set supporting the multiple virtual networks to the multiple virtual networks;
assigning, by the device, unique service set identifiers to the multiple virtual networks;
assigning, by the device, unique security credentials to the unique service set identifiers; and
transmitting, by the device, a beacon associated with an access point managing the multiple virtual networks, including beacon data indicating the basic service set identifier and at least one of a service set identifier that is not associated with the multiple virtual networks or an indicator indicating that the access point is associated with one or more virtual networks.
